# EUROPEAN PATENT APPLICATION

(11) **EP 4 470 427 A2**
(43) Date of publication of application: **04.12.2024**
(21) Application number: 24152393.5
(22) Date of filing: 28.12.2020
(51) Int. Cl.: A47J 31/44

(54) **COFFEE MACHINE, TAMPING SYSTEM AND VALVE ARRANGEMENT SUITABLE FOR USE IN A COFFEE MACHINE**

(30) Priority: 27.12.2019 EP 19219780
(62) Divisional of application: 20830276.0
(71) Applicant: Versuni Holding B.V., 5656 AE Eindhoven (NL)
(72) Inventor: TIBBE, Tim Gerard, 5656 AE Eindhoven (NL); LOOPSTRA, Kasper Roelof, 5656 AE Eindhoven (NL); ZWART, Bart-Jan, 5656 AE Eindhoven (NL); KLOKMAN, Pieter Herman, 5656 AE Eindhoven (NL); BAKKER-VAN DER KAMP, Gertrude Riëtte, 5656 AE Eindhoven (NL); SINNEMA, Anke Gerda, 5656 AE Eindhoven (NL); PANDA, Tara Prasad, 5656 AE Eindhoven (NL)
(74) Representative: Vollering, Stefanus Franciscus Maria

(57) **Abstract**

A coffee machine has an exterior mounting port to which a coffee vessel may be removably fitted. A water delivery head is positionally fixed with respect to a main housing of the coffee machine, and a tamping system is used to displace the coffee vessel (or part thereof) relative to the water delivery head thereby to provide tamping of coffee grounds contained in the coffee vessel.

## Description

### FIELD OF THE INVENTION

This invention relates to coffee or espresso machines, more particularly to a tamping system and valve arrangement for use in such machines.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The type of machine which is appropriate in a particular setting for example depends on the amount of use, and the budget.

In a manual espresso machine, a user fills a coffee receiving vessel, known as a portafilter, with coffee grounds. The user then needs to tamp the coffee grounds within the portafilter with sufficient pressure, such as around 200N, to create a so-called puck. The portafilter is then mounted to the coffee machine, usually via a bayonet type of connection. Next, the coffee machine drives hot water through the puck in the portafilter and the resulting coffee is dispensed via a spout that is typically integrated in the portafilter. After brewing, the user needs to disconnect and empty the portafilter, throwing away the used coffee grounds.

In a bar setting, the manual process is conducted by a barista. In a domestic setting, the manual steps of the process may make the user feel more involved in the coffee making process, and hence may give the feeling of performing the role of a barista.

There are also manual espresso machines with an integrated grinder. A user switches the portafilter between a first position where it receives ground coffee and a second position where coffee is brewed. Tamping may be done manually or via a manually operated lever.

In a fully automatic espresso machine, all of the above-mentioned steps are done automatically, in one and the same machine. The machine comprises a bean reservoir and a grinder, to make the coffee grounds. These grounds are transported into a brew chamber and tamped automatically, via a piston that may be hydraulically actuated or actuated via an electromotor. Next, hot water is driven through the coffee grounds in the brew chamber, coffee is brewed and dispensed, and the used coffee grounds are discharged from the brew chamber into a waste bin within the machine.

This removes the manual steps required by a manual espresso machine and hence saves time, as well as ensures more uniform results.

A manual espresso machine can be produced at lower cost than a fully automatic espresso machine, since many of the transporting steps do not need to be automated. However, the results may be less uniform, as a result of the user involvement in the filling and tamping process, in particular the user involvement in setting the volume or weight of coffee grounds, and the force and uniformity (straightness) of tamping of the coffee grounds into a puck. A manual espresso machine needs less maintenance since the coffee puck is removed after every brew by the consumer as part of the brewing process.

A fully automatic machine gives more consistent results, but is more costly. It also removes the barista feel of using a manual espresso machine. The fully automatic coffee machine also needs more maintenance (filling of coffee beans, water filing, removing waste water and getting rid of the coffee waste in the waste bin). The fully automatic coffee machine may also be bigger.

A third type of coffee machine has been proposed, which combines elements from the two types described above. This is described in this document as a hybrid espresso machine.

For example, US 9 125 519 discloses a coffee machine with a removable portafilter as used in a manual espresso machine, but which also includes a bean reservoir and a coffee mill for delivering coffee powder to an inserted portafilter. The portafilter functions as the brewing chamber, and a distribution filter (forming a plunger) is used for automatically tamping and thereby compacting the coffee powder in the portafilter before pressurized hot water is delivered to the portafilter.

This hybrid espresso machine thus combines elements from a manual espresso machine and a fully automatic espresso machine. In this type of machine, the user thus only needs to connect the empty portafilter to the machine. The grinding, dosing of the ground coffee in the portafilter, tamping of the ground coffee, hot water delivery and coffee dispensing is then automated as in a fully automatic machine. After brewing, the user needs to disconnect the portafilter and discharge the coffee waste, similarly to the way a manual espresso machine is used.

Although a hybrid coffee machine can be much less complex than a fully automatic coffee machine, the tamping process still complicates the design of the coffee machine, in particular with a plunger needing to be driven into the mounted portafilter or coffee vessel. There is also a desire to simplify the designs of both manual and fully automatic designs.

### SUMMARY OF THE INVENTION

The invention is defined by the claims.

Examples in accordance to the invention provide a coffee machine, comprising:
a main housing comprising an exterior mounting port;
a coffee vessel for removable fitting to the exterior mounting port of the main housing,
a water heater;
a water delivery system having a water delivery head for delivering heated water to the coffee vessel; and
a tamping system;
wherein the water delivery head is positionally fixed with respect to the main housing, and the tamping system comprises a drive arrangement for displacing the coffee vessel or a part of the coffee vessel relative to the water delivery head thereby to provide tamping of coffee grounds contained in the coffee vessel.

This coffee machine has a built-in tamping system, to enable preparation of espresso coffee, so that the tamping can be reliably and repeatably performed. Tamping of the coffee grounds is done by displacing the coffee vessel rather than the water delivery head. The displacement of the coffee vessel may further be used to close the coffee vessel so as to form a closed brew chamber. By displacing the coffee vessel instead of the water delivery head, no movement is needed of fluid passageways in the machine, which simplifies the construction. Due to its external location, the displacement of the coffee vessel may also be visible (or made readily visible) to the exterior of the coffee machine and thus may provide visual feedback on the tamping and/or closing process.

The coffee vessel is removably mounted to the exterior mounting port of the machine. The coffee machine is thus a manual or hybrid type of coffee machine as explained above. The coffee vessel may be filled with coffee grounds by the machine in the case of a hybrid type machine or by a user in the case of a manual type machine. In either case, the coffee vessel needs to be emptied by the user after use.

The coffee vessel may be considered to be an external part of the coffee machine. By this is meant that the coffee vessel is to be fitted to and removed from the main housing of the coffee machine manually, without special tools, and as normal part of the brewing process, i.e. before and after brewing.

The water delivery head is for delivering water to the coffee vessel. It may also serve as a surface against which the coffee grounds can be compacted. Thus, the water delivery head may functions as a (stationary) tamping piston. It may also serve to close the coffee vessel, to form a closed brew chamber.

The drive arrangement is for example for displacing the coffee vessel up and down.

This may be a simple linear translation of the coffee vessel towards and away from the stationary water delivery head. Other displacements are however possible, for example a pivoting movement or even a lateral movement. The displacement is preferably visible to the user.

The coffee vessel for example comprises a filter or filter basket. The coffee vessel thus delivers filtered espresso coffee.

The coffee vessel for example further comprises a support in which the filter or filter basket is housed. The support for example has a handle to assist in the connection of the coffee vessel to the mounting port. The user thus does not need to touch the filter or filter basket once it is in place in the support.

The filter basket is for example displaced relative to the support. Alternatively, the filter basket and the support may be displaced together. The filter basket and support may be moved as a single unit (akin to a portafilter). Alternatively, the filter or filter basket alone may be displaced once the coffee vessel or support has been coupled to the exterior mounting port.

The coffee vessel for example comprises a portafilter, comprising a filter or filter basket, a support or outer vessel with an open upper top and a lower dispensing nozzle, and a handle.

Alternatively, the filter or filter basket may be separate from the coffee vessel, for example mounted to the machine housing before the coffee vessel is attached. Thus, there are different options for the coffee vessel. It defines the brewing chamber and stores the coffee grounds to be compacted and brewed, but may or may not incorporate a filter.

The water delivery head for example comprises a filter and/or a water distribution disc. The water distribution disc provides an area of water delivery to the ground and compacted coffee. The filter enables the passage of water to the ground coffee while also retaining the ground coffee so that it may be compacted.

In one arrangement, the drive arrangement of the tamping system may comprise an electric drive arrangement. This is one option, enabling simple off-the-shelf components to be used. The tamping of the coffee grounds by the electric drive arrangement may be position controlled.

Position control is one way to control the tamping process to give a repeatable amount of compacting of the ground coffee.

In another arrangement, the water delivery system comprises a water pump, and the drive arrangement of the tamping system comprises a hydraulic drive arrangement which uses pressure delivered by the water pump.

In this way, a single water pump can be used for both water delivery for coffee brewing as well as pressurization for the tamping process. This reduces the component count and thereby reduces the cost as well as the size of the machine. The tamping of the coffee grounds by the hydraulic drive arrangement may be pressure controlled.

The tamping system may then further comprise a passive valve for selecting between a tamping mode of the water pump and a water delivery mode of the water pump.

The use of a passive valve avoids the need for user interaction to select between tamping and coffee brewing, and avoids the need to use controlled flow devices, even though the same pump is used in both cases. The passive valve may for example open when a tamping pressure has been reached. The tamping is then completed and water delivery takes place. This provides a pressure control approach.

This concept may advantageously be applied to any coffee machine with automated tamping, and thus may be applied to manual, fully automated or hybrid type espresso coffee machines, without the limitations of present claim 1. Therefore, according to an aspect of the invention a coffee machine may be provided, comprising:
a water reservoir;
a water heater;
a water pump;
a coffee vessel for receiving ground coffee;
a water delivery system having a water delivery head for delivering heated water to the coffee vessel; and
a tamping system for compacting ground coffee in the coffee vessel by providing relative movement between the water delivery head and the coffee vessel;
wherein:
   the tamping system comprises a hydraulic actuator;
   the water outlet from the water pump is coupled to the hydraulic actuator by a first fluid coupling; and
   the water outlet from the water pump is coupled to the water delivery head by a second fluid coupling which includes a passive in-line valve, wherein the passive in-line valve is adapted to open when the pressure reaches a desired tamping pressure.

In one example, the first fluid coupling is between the water reservoir and the hydraulic actuator without passing the water heater and the second fluid coupling is between the hydraulic actuator and the water delivery head passing the water heater.

Thus, cold water may be used for tamping and hot water may be used for brewing. The heating takes place between the hydraulic actuator and the water delivery head. This avoids cooling of the water during the tamping process and reduces energy usage.

In another example, the first fluid coupling is between the water reservoir and the hydraulic actuator without passing the water heater and the second fluid coupling is between the water reservoir and the water delivery head passing the water heater. There are then two parallel passageways from the water reservoir, only one of which includes the water heater. The water pump is used in both fluid couplings, and this shared coupling branches into the two parallel couplings at a branch point, downstream of the water pump but upstream of the water heater.

Thus, cold water may again be used for tamping and hot water may be used for brewing, again avoiding cooling of the water during the tamping process and reducing energy usage.

In another example, the water may be routed from the same branch point, downstream of the water heater. In such case, the heater may be controlled so that heated water is not used for the tamping.

In all examples, the coffee machine preferably further comprises a controller, adapted to switch off the water heater during actuation of the hydraulic actuator and switch on the water heater during water delivery to the water delivery head. Generally, this saves power. Where the water heater is located upstream of both fluid couplings, it prevents heating of the water used for tamping. It may also prevent the water inside the heater being turned into steam. If the water heater is kept on when there is no water being passed through, it will eventually cause the water inside the heater to reach boiling temperatures, even at high pressure. Using steam to brew coffee may reduce the quality of the coffee. It may also result in steam being blown out of the spout.

The passive valve may have a status detection system, and the controller may receive valve status information from the status detection system. This valve status information may be used to control the timing of operation of the heater and/or the pump and/or other control functions.

The coffee machine may further comprise a stabilizing system adapted to retain the tamping pressure during delivery of water to the water delivery head. Thus, a set pressure can be maintained in the coffee vessel (i.e. in the brew chamber) during brewing.

The stabilizing system for example comprises a shut-off valve, an overpressure valve or a mechanical lock.

The passive valve with status detection system may advantageously be applied in a hydraulic circuit of any of the coffee machines described above or any other coffee machine, without the limiting features of claim 1. Therefore, according to an aspect of the invention, a valve arrangement may be provided, adapted for use in a hydraulic circuit of a coffee machine, comprising:
an inlet channel;
an outlet channel;
a valve member between the inlet and outlet channels which is biased to isolate the inlet and outlet channels and is adapted to couple the inlet and outlet channels in response to a pressure present at the inlet channel; and
an integrated valve status detector for providing valve status feedback.

This provides a passive valve for use in a coffee machine hydraulic circuit with an integrated, and hence compact and low cost, valve status detector. This enables the valve function to be monitored, so that control actions may be taken which depend on the valve status.

The passive valve arrangement may comprise first and second sensor terminals adapted to move together and apart in response to movement of the valve member. This enables a contact sensor, or a capacitance sensor to be formed.

The valve member for example comprises a valve membrane between the inlet channel and the outlet channel and having an open state and a closed state, wherein the passive valve arrangement further comprises:
a drive member which is driven along a drive member axis by the bias of a spring, for urging the valve membrane to the closed state, wherein the valve membrane is adapted to move to the open state against the bias of the spring in response to the pressure present at the inlet channel;
a cam on the drive member;
first and second sensor terminals each mounted at a same position along the drive member axis, wherein one of the first and second sensor terminals is adapted to deform or be moved orthogonally to the drive member axis by the cam, thereby to change a spacing between the first and second sensor terminals, wherein the first and second sensor terminals together define the valve status detector.

The cam enables the valve status detector to operate with lateral movement, thereby limiting the space taken up by the detector.

An alternative is a pressure-differential sensor where the sensor pins are moved by two different driving members.

The cam thus provides an external actuator which moves with the valve operation, so that the internal operation of the valve is not compromised by adding the valve status detector. The sensor terminals are outside the fluid paths.

The first and second sensor terminals are each for example mounted at a fixed position along the drive member axis. This provides a compact arrangement.

The first and second sensor terminals are for example adapted to make and break contact by the action of the cam. The valve status detector is thus a contact/non-contact sensor, giving a binary output representing the valve state. An alternative is to provide an analog signal, for example based on a change of capacitance or resistance as a function of displacement.

The first and second sensor terminals are for example adapted to make contact in the open state and break contact in the closed state. The valve is thus normally closed (i.e. in the absence of an inlet pressure). The broken contact provides zero current consumption in this normally closed state, and this also protects the contacts against corrosion.

The first sensor terminal may comprise a contact arm which is biased inwardly to contact the second sensor terminal when the contact arm is not engaged by the cam, and is moved outwardly away from the second sensor terminal, against the bias of the contact arm, when the contact arm is engaged by the cam. The cam thus moves the contact arm against the bias when the tab is pushed outwardly, and the contact arms springs back when the cam is removed.

The first sensor terminal for example comprises a base arm connected to the contact arm by a sprung bend. The cam thus drives the two arms together against the bias of the bend when the tab is pushed outwardly, and the two arms spring apart when the cam is removed. This provides a one-piece component for each sensor terminal. The same terminals may form a male connector at a lateral outer edge of the valve arrangement.

The contact arm may comprise a sloped tab for engagement with the cam to push the contact arm outwardly.

The coffee machine may further comprise a coffee bean reservoir, and a grinder having a ground coffee outlet. In this way, the concept of this set of examples is applied to a hybrid type coffee machine, with internal coffee grinder but external brew chamber (as formed by the. removable coffee vessel as explained above).

The drive arrangement may be adapted to displace the coffee vessel or part thereof between a first position during delivery of ground coffee below the ground coffee outlet and a second positon with a top of the coffee vessel above the ground coffee outlet during delivery of heated water to the coffee vessel.

In this way, steam rising from the coffee vessel during the brewing process cannot easily flow to the coffee in the grinder and bean reservoir, thus preserving the freshness of the coffee beans. By providing this function as part of an upward movement of the coffee vessel for the tamping process, the movement of the coffee vessel achieves multiple advantages.

The coffee vessel or the drive arrangement may for example close the ground coffee outlet during delivery of heated water to the coffee vessel. This provides further isolation of the coffee stored in the grinder and reservoir from steam produced during brewing.

In all examples above, a controller may be provided which is adapted to control one or more of the following:
the heating of water;
the grinding of coffee beans;
the dosing of ground coffee to the coffee vessel;
the displacement of the coffee vessel relative to the water delivery head; and
the delivery of hot water.

Thus, the coffee making process is automated apart from the attachment of the coffee vessel to the exterior mounting port, before making coffee and the detachment of the coffee vessel after making coffee, to discard the used coffee grounds. In this way, all the critical steps (grinding, tamping, brewing) are automatically performed by the machine. Only the non-critical step of discharging the used coffee grounds needs to be performed manually by a user. As a result, coffee of good, consistent quality can be prepared in a foolproof manner, but with a machine that is less complex and therefore more affordable than a fully automatic espresso machine, because the user discharges the coffee waste himself. There is thus no need for a complex discharge arrangement or automated brew chamber movement.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows the general design of a coffee machine to which various embodiments may be applied;
Figs. 2A to 2C show three examples of possible hydraulic circuit;
Fig. 3 shows the steps of a tamping process;
Fig. 4 shows an example of an alternative tamping movement;
Figs. 5 to 8 show how the tamping approach of Fig. 3 is implemented using the hydraulic circuit of Fig. 2A;
Fig. 9 shows in schematic form a passive valve with a valve status detector;
Fig. 10 shows a passive valve design in more detail;
Fig. 11 shows the sensor terminals.
Fig. 12 shows how contact is made (left image) and broken (right image);
Fig. 13 shows three possible designs for the contact bump in plan view and in cross section;
Fig. 14 shows the cam of the drive member;
Fig. 15 shows a top view of the valve housing and shows the lateral male connector formed by the two sensor terminals;
Fig. 16 shows the male connector in more detail; and
Fig. 17 shows how the sensor terminals are pushed through openings to form the male connector.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention relates in particular to a coffee machine which has an exterior mounting port to which a coffee vessel may be removably fitted. A water delivery head is positionally fixed with respect to a main housing of the coffee machine, and a tamping system is used to displace the coffee vessel (or part thereof) relative to the water delivery head thereby to provide tamping of coffee grounds contained in the coffee vessel. The displacement of the coffee vessel (or part thereof) may further serve to close the coffee vessel so as to form a brew chamber.

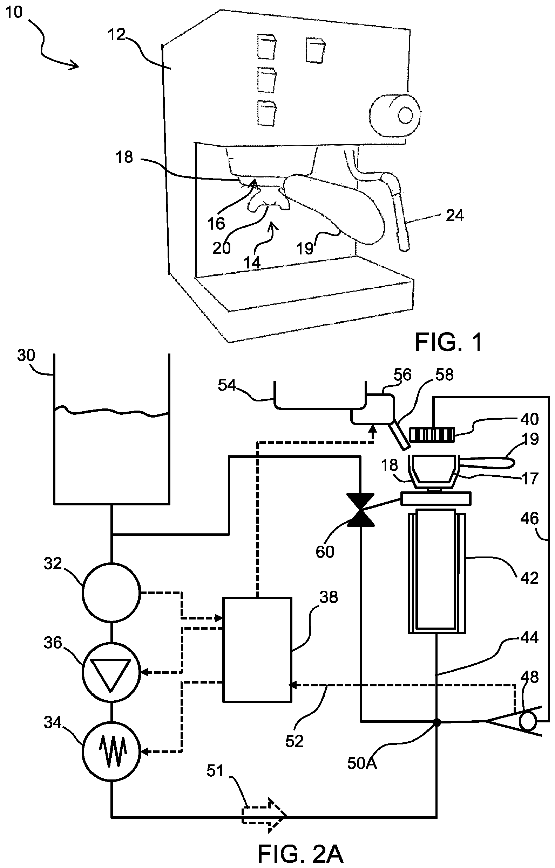

Fig. 1 shows the general design of a coffee machine to which the invention may be applied. The example of Fig. 1 may be a manual espresso machine or a hybrid espresso coffee machine, depending on how the grinding is performed. The coffee machine 10 comprises a main housing 12 having an exterior mounting port 14, for receiving a coffee vessel 16. The illustrated machine further comprises a steam nozzle 24.

The coffee vessel 16 may comprise a filter or filter basket 17 (see Fig. 2A). It may further include a support 18, for accommodating the filter or filter basket. The coffee vessel 16 may further comprise a lower spout 20 for dispensing brewed coffee. It may further comprise a handle 19. The coffee vessel 16 may correspond to a conventional portafilter, as illustrated in the Figures. In use, the coffee vessel 16 may be fitted to the exterior mounting port 14, for example with a bayonet coupling.

The term "coffee vessel" in this description is used generally to denote a container which is filled with ground coffee and is subsequently closed to form a brew chamber in which the coffee is brewed.

In the case of a manual machine, the brew chamber is the external chamber formed by the portafilter. In the case of a hybrid type machine, the brew chamber may be considered to be at least partly external, although ground coffee is delivered internally. For both machine types, discharging of the puck after brewing is performed externally. The term coffee vessel is intended to cover all of these possibilities, so that the actual item referred to depends on the type of machine being referred to. The coffee vessel will include a part that immediately contains the coffee, for example a filter or filter basket. Thus, as is explained further below, movement of this part (which directly retains the coffee), is sufficient to move the coffee grounds for tamping and also for closing the coffee vessel.

The main housing 12 contains a hydraulic circuit which provides fluid couplings between a water supply (typically a water reservoir), an internal water heater and a water delivery system having a water delivery head for delivering heated water to the coffee vessel.

Figs. 2A to 2C show three examples of possible hydraulic circuit. The same reference numbers are used in the different figures to denote the same components. Figs. 2A to 2C all show examples of hydraulic circuit with an internal grinder but an external coffee vessel, and thus are all suitable for use in a hybrid type coffee machine.

Fig. 2A shows a water reservoir 30, a flow meter 32 (for flow rate and dosing control), a water heater 34, a water pump 36 and a controller 38. The flow meter 32 may provide a flow measurement to controller 38, and the controller 38 controls the heater and pump to perform the coffee brewing process. The water heater may for instance be a flow through heater, e.g. a thermoblock. The flow meter 32 is optional. Dosing and flow rate control may alternatively be done via suitable control of the pump 36 (power level and pump time).

In the illustrated embodiment, the coffee vessel 16 is shown as a portafilter, including a filter basket 17, mounted inside a support 18 with a handle 19.

The water delivery system comprises a fluid passage for delivering heated water to the water delivery head 40, which in turn delivers the heated water to the coffee vessel 16. The water delivery head comprises a water distribution disc. The water distribution disc provides an area of water delivery to the ground coffee. The water delivery head may further comprise a filter that enables the passage of water while also retaining the ground coffee so that it may be compacted during tamping.

A tamping system is provided for compacting the ground coffee in the coffee vessel by providing relative movement between the water delivery head 40 and the coffee vessel 16. This relative displacement closes the coffee vessel to form a closed chamber, i.e. a brew chamber, and applies force to the ground coffee to perform tamping. In the specific example shown, the relative movement is achieved by moving the coffee vessel 16 rather than by moving the water delivery head.

The tamping system may include an electric drive arrangement to move the coffee vessel 16. However, in the illustrated embodiment, a hydraulic actuator 42 is provided. The hydraulic actuator 42 comprises a piston which is driven by hydraulic pressure. It may further comprise a return spring, to help retracting the piston after brewing.

A water outlet from the water pump 36 is coupled to the hydraulic actuator 42 by a first fluid coupling 44. The water outlet from the water pump is also coupled to the water delivery head 40 by a second fluid coupling 46. The second fluid coupling includes a passive in-line valve 48. The passive in-line valve opens when the pressure at the inlet side of the hydraulic actuator (i.e. at branch point 50A) reaches a desired tamping pressure.

Below this pressure, the valve 48 stays closed. There may be hysteresis, so that the valve 48 opens at a first threshold pressure (an opening pressure), but only recloses when a lower second threshold pressure (a closing pressure) is reached. Alternatively, there may be only one threshold pressure.

In this way, the water pump 36 is used for both water delivery for brewing as well as water delivery for tamping. The passive in-line valve 48 switches automatically between these two water delivery functions, without the need for user interaction or electrical actuators. The passive valve 48 opens when a tamping pressure has been reached, i.e. when tamping has been completed. Water delivery then takes place to the water delivery head via the open valve 48. During this water delivery to the water delivery head, the tamping pressure is maintained.

The passive valve 48 functions as a pressure controlled system in that it responds to the prevailing pressure. Thus, the tamping is reliable and repeatable. By implementing pressure control, the desired tamping pressure may be applied to any volume of coffee within the coffee vessel, which is not simple to achieve if position control is employed.

In the example shown in Fig. 2A, the first and second fluid couplings 44, 46 meet at the branch point 50A downstream of the heater 34. Water is routed from the same branch point 50A either to the hydraulic actuator 42 or to the water delivery head 40. To avoid the use of hot water for the tamping process, the controller 38 may switch off the water heater 34 during actuation of the hydraulic actuator 42 and switch on the water heater during water delivery to the water delivery head 40.

In order to know when to switch on and off the heater, the passive valve 48 may include a status (open/closed) detection system, and the controller 38 may receive valve status information (open/closed) 52 from the status detection system. A suitable example of a passive valve with a status detection system is described further below. Alternatively, the hydraulic actuator may be provided with a detection means, to distinguish between tamping and brewing, e.g. based on a position of the piston inside the hydraulic actuator.

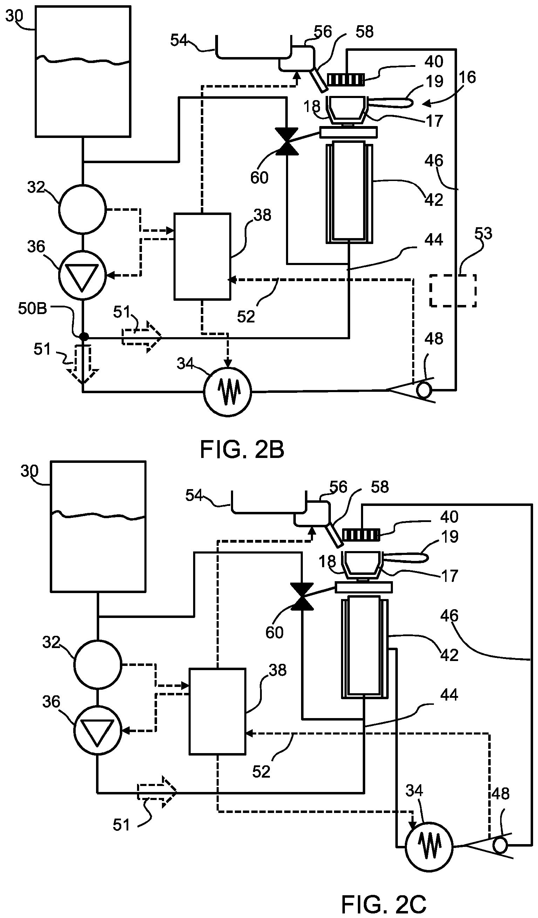

Fig. 2B shows a modification to the hydraulic circuit of Fig. 2A, in which the first fluid coupling 44 is instead between the water reservoir 30 (or more particularly, the water pump 36) and the hydraulic actuator 42 without passing the water heater 34, since hot water is not needed for driving the hydraulic actuator 42. The second fluid coupling 46 is however between the water reservoir 30 (or more particularly, the water pump 36) and the water delivery head 40 passing the water heater 34.

In Fig. 2B, water is thus routed from different points in the hydraulic circuit. The first fluid coupling 44 includes the pump 36 but is between the water reservoir 30 and the hydraulic actuator 42 without passing the water heater 34. The second fluid coupling 46 also includes the pump 36, but is between the water reservoir 30 and the water delivery head 40 and passing the water heater 34. There are thus two parallel fluid couplings from the water reservoir 30, only one of which includes the water heater 34. The water pump 36 is used in both fluid couplings, and this shared fluid coupling section branches into the two parallel fluid couplings at a branch point 50B, downstream of the water pump but upstream of the water heater.

In Fig. 2C, the first fluid coupling 44 is between the water reservoir 30 and the hydraulic actuator 42 without passing the water heater 34, and includes the pump 36. The second fluid coupling 46 is between the hydraulic actuator 42 and the water delivery head 40 and passes the water heater 34. Thus, the two fluid couplings are in series, with one on each side of the hydraulic actuator 42. The pump 36 is in the first fluid coupling 44 and the heater 34 is in the second fluid coupling 46.

Cold water is again used for tamping and hot water is used for brewing. The heating takes place between the hydraulic actuator and the water delivery head. This avoids cooling of the water during the tamping process and reduces energy usage.

As mentioned above, after opening of the valve 48, the tamping pressure needs to be retained during delivery of water to the water delivery head 40. For this purpose a stabilizing system may be used. As will be explained below in further detail, this stabilizing system may comprise various active and/or passive flow components, e.g. a shut-off valve, a mechanical lock, a check valve 51 and/or a flow restriction 53. Further, the area ratio of the piston may play a role, as will be explained below. All stabilizing components may be tuned so as to maintain a desired tamping force, whilst allowing sufficient water to flow to and through the brew chamber. Some of the aforementioned valves may be embodied as overpressure valve, to function as safety device and limit the amount of force exerted during tamping and brewing.

When water is pumped into the hydraulic actuator 42, the actuator is closed so that pressure can built up and move the piston upward. At the end of the brewing cycle, this water needs to be drained from the actuator to allow the piston to retract. Optionally, a return spring may be provided (not shown) to help the piston retracting.

To drain water from the hydraulic actuator, a return path may be provided between the hydraulic actuator 42 and the water reservoir 30, as shown in Figs. 2A-C. Further, a valve 60 is provided, to open or close the return path. The valve 60 may for instance comprise an electronic shut-off valve. However, such a valve is relatively expensive. Therefore, preferably, the valve 60 is implemented as a mechanical lock that may be actuated either by a separate handle, or by the action of attaching/ detaching the coffee vessel 16. More particularly, the valve 60 may be closed when the coffee vessel 16 is attached and be opened when the coffee vessel is detached. Thus, opening and closing of the valve 60 may be controlled in response to or through user action. Since this user action is already a required part of the coffee brewing process, effectively no extra user action is required.

In all examples of Figs. 2A to 2C, in addition to the passive in-line valve 48, there is only one active valve 60. This active valve may be operated by the insertion and removal of the coffee vessel, as described above. The hydraulic circuits of Figs. 2A to 2C may further include one or more passive parts, in particular one or more check valves (one-way valves) 51 and/or flow restrictions 53, as indicated in dotted lines.

The illustrated check valve(s) 51 are arranged to prevent back flow from the hydraulic actuator 42. Such back flow would otherwise allow the piston to lower and the brew chamber to open. Back flow may for instance occur in coffee machines that include a pre-brew step after tamping. During such a pre-brew step, the water pump 36 is briefly switched on to dose a small amount of water onto the compacted coffee, then switched off to allow the coffee grounds to bloom, and then switched on again to start the actual brewing process. During the time that the pump is switched off, pressure may drop and back flow from the hydraulic actuator 42 may occur. In the illustrated examples, this is prevented by the check valve(s) 51.

The check valve(s) 51 may also be advantageous in case the area ratio of the tamping piston is sub-optimal, i.e. the ratio between the cross sectional area inside the hydraulic actuator 42 that is subjected to the water pressure supplied by the pump, and the cross sectional area inside the brew chamber, that is subjected to the brew pressure during brewing. If this area ratio is not appropriate, the force exerted on the piston by the brewing pressure (and, optionally, the return spring) may be larger than the force exerted on the piston by the water pressure supplied by the pump. By preventing any water exiting the hydraulic actuator 42 by means of a check valve 51 as explained above, it can be avoided that the piston starts retracting. In such case, preferably an overpressure valve may be provided as well, to act as safety valve by avoiding the pressure inside the hydraulic actuator 42 from reaching too high values.

Alternatively or additionally, the area ratio may be optimized. The significance of this area ratio is now explained. During tamping, the ground coffee is compressed. The more the coffee is compressed, the more counter-pressure it generates when water is pumped through. As the entire system is connected to the same pump, an increase in brewing pressure (created by the ground coffee as water is forced through) will also increase the pressure in the hydraulic actuator used to tamp the coffee. This causes more force to be exerted on the ground coffee, compressing it further. This, in turn will increase the brewing pressure, which increases the tamping pressure, etc. This can lead to the system blocking itself given enough time.

By adjusting the area ratio, a ratio of abovementioned counteracting forces can be adapted, allowing the piston to move slightly during brewing. This is one way to prevent the system from blocking. In such case, preferably a safety lock may be provided as well to prevent the brewing chamber from opening accidentally because of the piston movement.

Alternatively or additionally, a hydraulic restriction (resistance) 53 may be added in the circuit, as illustrated in Fig. 2B in dotted lines. This restriction 53 creates a pressure differential dependent on the amount of water flowing there through. The higher the flow, the higher the pressure differential between the pressure in the brew chamber and the pressure in the hydraulic actuator 42 (with the pressure in the hydraulic actuator 42 being higher). If the piston areas are equal, the force exerted by the water pressure in the hydraulic actuator will become larger than the force exerted by the brew chamber pressure. This would create a net upward movement of the piston, causing the ground coffee to be compressed further. This in turn would cause the pressure in the hydraulic actuator and the brew chamber to increase as the pump needs to work harder to push the water through the ground coffee. As the pumps in a coffee appliance have a lower flow at a higher pressure (and vice versa), increasing the pressure will create a lower flow. As a result, the flow through the restriction 53 will be lower as well, causing the pressure differential and resulting upward force on the piston to decrease. Thus, the flow restriction 53 may help to equalize a pressure differential that may exist over the piston with a given area ratio.

From the above it is clear that the pressures and forces acting on the piston during use, if not balanced well, may cause the brew chamber to open up inadvertently during brewing or cause the piston to provide tamping with such force that no water can pass through the ground coffee, thus blocking the system. The pressures, forces and flow rates prevailing in the system may further depend on the amount of ground coffee in the brew chamber and/or the grind size.

The pressures, forces and flow rates may be balanced by tuning the piston area ratio, the piston return spring force (if present) and/or the size of the restriction 53. Furthermore, check valves 51 may be added to prevent back flow from the actuator.

Figs. 2A to 2C also show a bean reservoir 54 and a coffee grinder 56 having a ground coffee outlet 58. Figs. 2A to 2C thus show a hybrid type design, with an internal coffee grinder and a brew chamber in the form of a coffee vessel 16 which is removably mounted to an external mounting port 14 and is emptied externally by the user as part of the normal operation of the coffee machine.

As mentioned above, the example shown has a water delivery head 40 which is positionally fixed with respect to the main housing 12, and the hydraulic actuator 42 of the tamping system displaces the coffee vessel 16 (or part thereof) relative to the water delivery head 40 to provide closing of the brew chamber and tamping.

This approach of using a stationary water delivery head 40 and a movable vessel 16 is not limited to the specific examples of hydraulic circuit which are shown in Figs. 2A to 2C. For example, the passive valve 48 may be an actively controlled valve. Also, it is not limited to hydraulic actuators. Instead, it may be applied to coffee machines with any drive arrangement, such as an electric motor. Also, this approach may be applied to coffee machines without an internal coffee supply and grinder, and hence may be applied to manual espresso machines, wherein the coffee vessel may be filled with ground coffee by the user before fitting the coffee vessel to the machine.

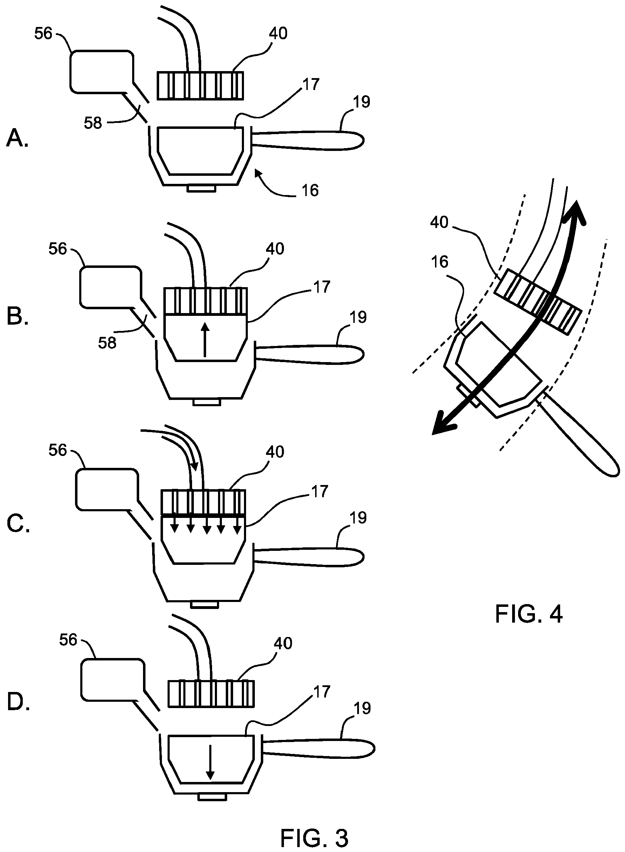

Fig. 3 shows the steps of the tamping process.

In Fig. 3A, the coffee vessel 16 is illustrated as a portafilter, with a support 18, a filter 17 and a handle 19. The coffee vessel 16 is mounted to the mounting port 14 by the user. Ground coffee is then delivered to the coffee vessel by the grinder 56, which may be controlled by controller 38.

In Fig. 3B, the drive arrangement displaces the coffee vessel 16 towards the water delivery head 40. This provides compacting of the ground coffee. As a minimum, the filter 17 is displaced, i.e. the container immediately surrounding the retained coffee, as shown in Fig. 3. However, alternatively, the entire coffee vessel 16 (corresponding to the portafilter in the case of Fig. 3) may be displaced.

The water delivery head 40 may comprise an inlet filter for the coffee vessel and the filter 17 forms or comprises an outlet filter. The tamping is between these two filters. The coffee vessel may even not include a filter, since both filters may be implemented as separate items, for example separately loaded into the main housing of the machine. Thus, many different configurations are possible.

In Fig. 3C the coffee brewing takes place with hot water delivered to the water delivery head 40 under pressure.

In Fig. 3D, the drive arrangement returns the filter 17 to its initial position, so that the coffee vessel 16 can be removed to dispose of the coffee puck.

By displacing the coffee vessel rather than the water delivery head to implement the tamping process, no movement is needed of fluid passageways in the machine, which simplifies the construction. In the case where the coffee vessel is visible from the exterior, such as typically is the case in a hybrid and manual espresso machine, the tamping process may become a visible part of the coffee making process, because movement of the external coffee vessel may be visible or made visible.

In the example shown, the drive arrangement displaces the coffee vessel up and down. This is shown as a simple linear translation of the coffee vessel towards and away from the static water delivery head 40. Other displacements are however possible, for example a pivoting movement or even a lateral movement.

Fig. 4 shows an example of an alternative movement, with a pivoting arrangement. Other displacements are possible, including horizontal as well as vertical.

There is, however, an additional advantage which can be achieved when displacing the coffee vessel up and down. This additional advantage can be seen in Fig. 3, in particular in Figs. 3B and 3C.

The drive arrangement displaces the coffee vessel between a first and second position. The first position is during delivery of ground coffee as shown in Fig. 3A. At this time, the top of the coffee vessel 16 is below the ground coffee outlet 58 so that ground coffee can be delivered under gravity. The second positon is during delivery of heated water to the coffee vessel through the water delivery head as shown in Fig. 3C. At this time the top of the coffee vessel is above the ground coffee outlet 58.

In this way, steam rising from the coffee vessel during the brewing process of Fig. 3C cannot flow to the coffee in the grinder 56 or in the coffee beans reservoir, thus preserving the freshness of the coffee beans. It also prevents blockage which may result from damp coffee beans. The movement of the coffee vessel during tamping thus achieves multiple advantages.

The coffee vessel or the drive arrangement may also be adapted to physically close the ground coffee outlet 58 during the delivery of heated water to the coffee vessel through the water delivery head. This provides further isolation of the coffee in the grinder and reservoir from steam produced during brewing.

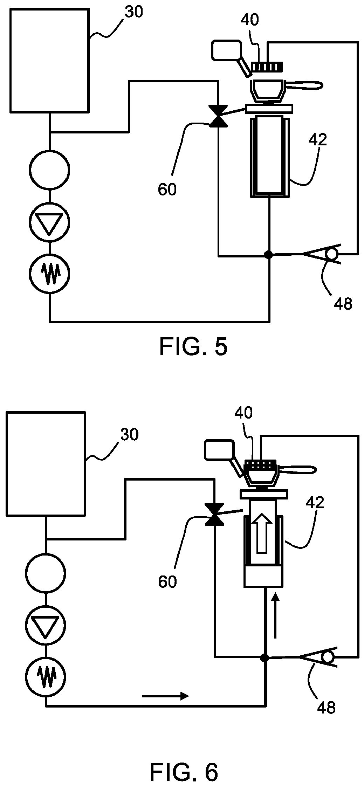

Figs. 5 to 8 show how this tamping approach is implemented using the hydraulic circuit of Fig. 2A, simply by way of example.

Fig. 5 shows insertion of the coffee vessel 16. There is no fluid flow in the circuit and valve 60 is closed.

Fig. 6 shows the tamping process. The hydraulic actuator in this example lifts the entire coffee vessel 16. The pump is operated to pressurize the hydraulic actuator 42 but the heater 34 remains turned off. The valve 60 remains closed.

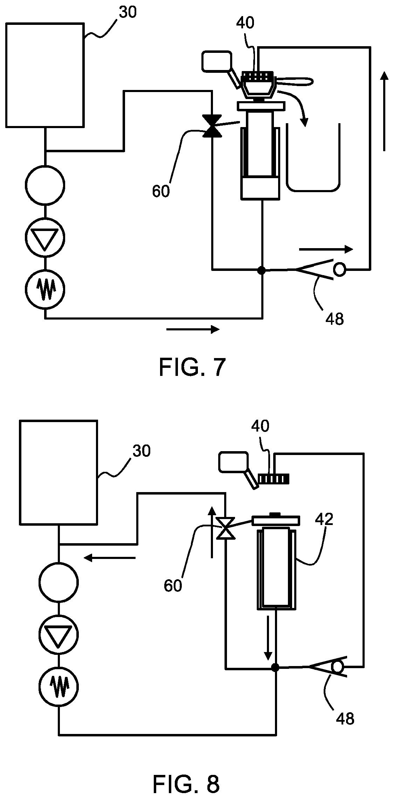

In Fig. 7 the tamping pressure is reached. The passive valve 48 opens, the heater is turned on (e.g. based on detection that the valve 48 has opened) and brewing takes place. A coffee cup is thus filled.

In Fig. 8, the valve 60 is opened. This may be performed as a manual action of the user, for example via a manually operated switch, or by performing an initial step of the removal of the coffee vessel, e.g. a rotation in its bayonet coupling, as explained above. Thus, water from the hydraulic actuator can flow back to the water reservoir 30 through valve 60. The draining of the hydraulic actuator causes the piston and coffee vessel to lower and the brew chamber to open. Some water vapor may then escape. This water vapor travels upwards, away from ground coffee residue in the grinder.

Once fully lowered, the coffee vessel may be removed and emptied by the user.

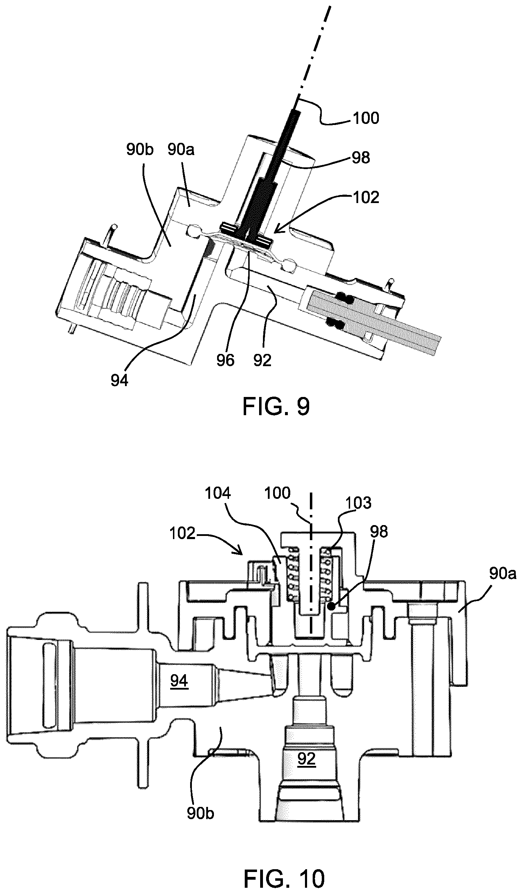

Fig. 9 shows in schematic form a passive valve with a valve status detector suitable for use as valve 48 in the example circuits of Figs. 2A to 2C.

The passive valve illustrated in Fig. 9 is based on the valve design described in detail in WO 2018/122055.

The passive valve arrangement comprises a housing 90a, 90b which defines an inlet channel 92 and an outlet channel 94.

A disc shaped valve membrane 96 is arranged between the inlet channel and the outlet channel and has an open state and a closed state. In the example shown, the inlet channel 92 opens to a central portion of the valve membrane, whereas the outlet channel opens to an edge area of the valve membrane.

A drive member 98, in this example formed as a piston, is driven along a drive member axis 100 by the bias of a spring (not shown), for urging the valve membrane to the closed state. The valve membrane moves to the open state against the bias of the spring in response to the pressure present at the inlet channel 92.

To the extent described above, the valve design is as described in WO 2018/122055 to which reference is provided.

This design may be modified by the incorporation of a sensing mechanism, which may be based on capacitive measurement, optical detection, or magnetic sensing, based on the bottom and/or top position of the drive member 98. The sensing mechanism is chosen to prevent any significant influence to the valve opening pressure.

One example of suitable modification to the design of WO 2018/122055 is to provide first and second sensor terminals, generally shown as 102. In this example, they move together and apart with movement of the drive member 98.

This may be used to provide contact/non-contact sensing to provide a binary detection signal. Alternatively, capacitance measurement may be employed to give a range of detection values for the valve opening distance.

Fig. 10 shows an approach based on contact/non-contact sensing in more detail. The drive member 98 is biased towards the membrane 96 by a spring 103. The drive member has a cam 104 on an outer surface. This is used to engage with the arrangement of first and second sensor terminals.

Each sensor terminal may be mounted at a fixed position along the drive member axis 100. One of the first and second sensor terminals deforms or moves orthogonally to the drive member axis by the action of the cam. This changes a spacing between the first and second sensor terminals.

This provides a passive valve with an integrated compact and low cost valve status detector. This enables the valve function to be monitored, so that control actions may be taken which depend on the valve status, as has been explained above. The cam 104 enables the valve status detector to operate with lateral movement, thereby limiting the space taken up by the detector.

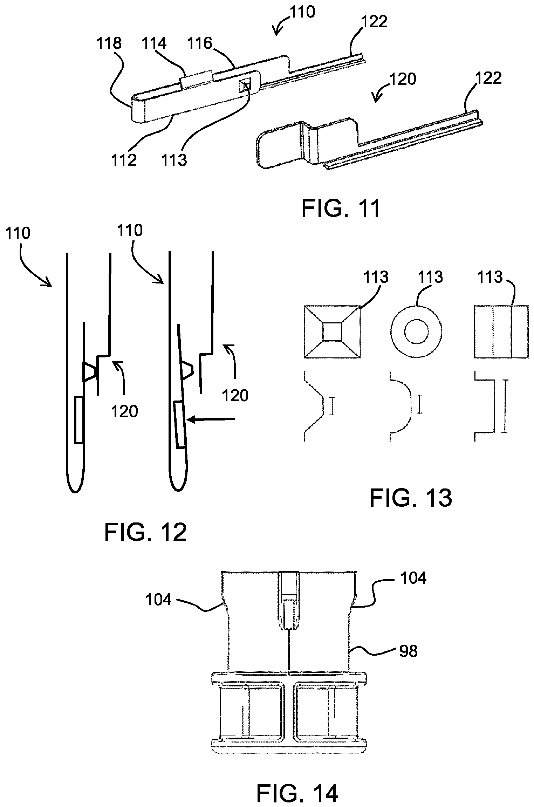

Fig. 11 shows the sensor terminals.

A first sensor terminal 110 comprises a contact arm 112 which is biased inwardly (i.e. towards the axis 100) to contact a second sensor terminal 120 when the contact arm 112 is not engaged by the cam, and is moved outwardly away from the second sensor terminal 120, against the bias of the contact arm, when the contact arm is engaged by the cam. The illustrated contact arm 112 has a contact bump 113 and a tab 114. The cam engages with the tab 114 to move the contact arm against the bias when the tab 114 is pushed outwardly, and the contact arm springs back when the cam is removed.

The first sensor terminal in the example shown comprises a base arm 116 connected to the contact arm 112 by a sprung bend 118. The cam thus drives the two arms 112, 116 of the first sensor terminal together against the bias of the bend when the tab is pushed outwardly, and the two arms spring apart when the cam is removed. This enables a one-piece component for each sensor terminal.

The opposite ends of the sensor terminals 110, 120 form a male connector, with integrated connector pins 122. This male connector is preferably arranged at a lateral outer edge of the valve arrangement.

The first and second sensor terminals 110, 120 make and break contact by the action of the cam 104. The valve status detector is thus a contact/non-contact sensor in this example, giving a binary output representing the valve state. An alternative is to provide an analog signal, for example based on a change of capacitance or resistance as a function of displacement and hence distance between the sensor terminals.

Fig. 12 shows how contact is made (left image) and broken (right image).

Fig. 13 shows three possible designs for the contact bump 113 in plan view and in cross section. It may be a truncated pyramid, a flat-topped hemisphere, or a rectangular ridge. The contact bump may be formed as an indent (which then projects from an opposite side) or by folding.

Fig. 14 shows the cam 104 of the drive member 98. There may be a set of cam elements around the periphery. Only one is needed to engage with the sensor terminals. However, multiple cams enable the drive member to be fitted in different angular positions. The cams may be used as alignment features to ensure one of the cams is correctly aligned with the tab 114 of the first sensor terminal 110. They may also be used as guides so that the angular position of the drive member is fixed when it slides up and down (of course this is only needed if it is circular). For example, a guiding wall in the housing 90a,b may extend between a pair of the cams.

The passive valve is normally closed because in the absence of an inlet pressure, the spring biases the drive member 98 against the valve membrane 96. The drive member is thus driven downwardly (for the orientation used in the figures). This means the cam 104 is engaged with the tab 114 so that the contact between the sensor terminals is broken. This provides zero current consumption of the sensor in this normally closed state of the passive valve.

It also means that the contacts (contact bump 113) are normally separated. When in contact, material corrosion is more rapid. Thus, limiting the amount of contact time limits the corrosion, and limits the amount of design effort needed to ensure corrosion resistance over the device lifetime. For example, a thinner layer of gold or other passivating metal may suffice.

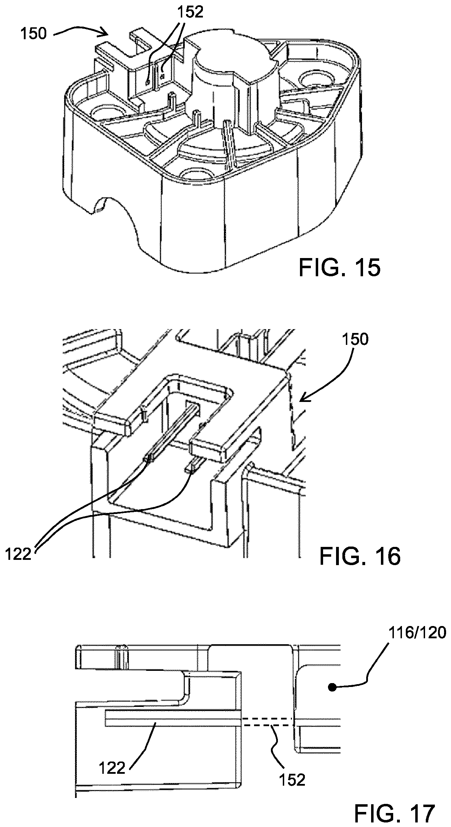

Fig. 15 shows a top view of the valve housing 90a,b and shows the lateral male connector 150 with openings 152 for the connector pins 122 of the two sensor terminals 110, 120. The male connector 150 may for example be a JST connector. A JST connector normally has solid pins. However, the sensor terminals 110, 120 are formed as sheet metal. To enable their ends 122 to function as square contact pins, an L-shaped cross section may be used for the shaft of the terminals 110, 120, as shown in Fig. 11. This resists bending. A flat profile may be used for the arms 112, 116.

Fig. 16 shows the male connector 150 in more detail, with connector pins 122 inserted through the openings 152.

Fig. 17 shows how the ends 122 of the sensor terminals 110, 120 are pushed through the openings 152 to form the male connector.

The following numbered paragraphs provide further disclosure of the present subject matter.
1. A coffee machine (10), comprising:
   a main housing (12) comprising an exterior mounting port (14);
   a coffee vessel (16) for removable fitting to the exterior mounting port of the main housing,
   a water heater (34);
   a water delivery system having a water delivery head (40) for delivering heated water to the coffee vessel; and
   a tamping system (42);
   wherein the water delivery head is positionally fixed with respect to the main housing, and the tamping system comprises a drive arrangement for displacing the coffee vessel or part thereof relative to the water delivery head thereby to provide tamping of coffee grounds contained in the coffee vessel (16).
2. A coffee machine according to paragraph 1, wherein the drive arrangement is for displacing the coffee vessel (16) or part thereof up and down.
3. A coffee machine according to any one of paragraphs 1 to 2, wherein the coffee vessel (16) comprises a filter or filter basket.
4. A coffee machine according to paragraph 3, wherein the coffee vessel (16) further comprises a support (18) in which the filter or filter basket is housed.
5. A coffee machine according to paragraph 4, wherein the filter or filter basket is displaced relative to the support or the filter or filter basket and the support are displaced together.
6. A coffee machine according to any one of paragraphs 1 to 5, wherein the water delivery head comprises a water distribution disc, and optionally a filter.
7. A coffee machine according to any one of paragraphs 1 to 6, wherein the drive arrangement of the tamping system comprises an electric drive arrangement.
8. A coffee machine according to paragraph 7, wherein tamping by the electric drive arrangement is position controlled.
9. A coffee machine according to any one of paragraphs 1 to 6, wherein the water delivery system comprises a water pump (36), and wherein the drive arrangement of the tamping system comprises a hydraulic drive arrangement which uses pressure delivered by the water pump.
10. A coffee machine according to paragraph 9, wherein tamping by the hydraulic drive arrangement is pressure controlled.
11. A coffee machine according to paragraph 9 or 10, wherein the tamping system further comprises a passive valve (48) for selecting between a tamping mode of the water pump and a water delivery mode of the water pump.
12. A coffee machine according to any one of paragraphs 1 to 11, further comprising a coffee bean reservoir (54) and a grinder (56) having a ground coffee outlet (58).
13. A coffee machine according to paragraph 12, wherein the drive arrangement is adapted to displace the coffee vessel or part thereof between a first position during delivery of ground coffee below the ground coffee outlet and a second positon with a top of the coffee vessel above the ground coffee outlet during delivery of heated water to the coffee vessel.
14. A coffee machine according to paragraph 13, wherein the coffee vessel or the drive arrangement closes the ground coffee outlet during delivery of heated water to the coffee vessel.
15. A coffee machine according to paragraph 12, 13 or 14, comprising a controller (38), which is adapted to control at least one of the following:
   the heating of water;
   the grinding of coffee beans;
   the dosing of ground coffee to the coffee vessel;
   the displacement of the coffee vessel relative to the water delivery head; and
   the delivery of hot water.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A coffee machine (10), comprising:
a main housing (12) comprising an exterior mounting port (14);
a coffee vessel (16) for removable fitting to the exterior mounting port of the main housing,
a water heater (34);
a water delivery system having a water delivery head (40) for delivering heated water to the coffee vessel; and
a tamping system (42);
wherein the water delivery head is positionally fixed with respect to the main housing, and the tamping system comprises a drive arrangement for displacing the coffee vessel or part thereof relative to the water delivery head thereby to provide tamping of coffee grounds contained in the coffee vessel (16),
**characterized in that**
the coffee machine further comprises a coffee bean reservoir (54) and a grinder (56) having a ground coffee outlet (58).

2. A coffee machine as claimed in claim 1, wherein the drive arrangement is for displacing the coffee vessel (16) or part thereof up and down.

3. A coffee machine as claimed in any one of claims 1 to 2, wherein the coffee vessel (16) comprises a filter or filter basket.

4. A coffee machine as claimed in claim 3, wherein the coffee vessel (16) further comprises a support (18) in which the filter or filter basket is housed.

5. A coffee machine as claimed in claim 4, wherein the filter or filter basket is displaced relative to the support or the filter or filter basket and the support are displaced together.

6. A coffee machine as claimed in any one of claims 1 to 5, wherein the water delivery head comprises a water distribution disc, and optionally a filter.

7. A coffee machine as claimed in any one of claims 1 to 6, wherein the drive arrangement of the tamping system comprises an electric drive arrangement.

8. A coffee machine as claimed in claim 7, wherein tamping by the electric drive arrangement is position controlled.

9. A coffee machine as claimed in any one of claims 1 to 6, wherein the water delivery system comprises a water pump (36), and wherein the drive arrangement of the tamping system comprises a hydraulic drive arrangement which uses pressure delivered by the water pump.

10. A coffee machine a claimed in claim 9, wherein tamping by the hydraulic drive arrangement is pressure controlled.

11. A coffee machine as claimed in claim 9 or 10, wherein the tamping system further comprises a passive valve (48) for selecting between a tamping mode of the water pump and a water delivery mode of the water pump.

12. A coffee machine as claimed in claim 1, wherein the drive arrangement is adapted to displace the coffee vessel or part thereof between a first position during delivery of ground coffee below the ground coffee outlet and a second position with a top of the coffee vessel above the ground coffee outlet during delivery of heated water to the coffee vessel.

13. A coffee machine as claimed in claim 12, wherein the coffee vessel or the drive arrangement closes the ground coffee outlet during delivery of heated water to the coffee vessel.

14. A coffee machine as claimed in claim 1, 12 or 13, comprising a controller (38), which is adapted to control at least one of the following:
the heating of water;
the grinding of coffee beans;
the dosing of ground coffee to the coffee vessel;
the displacement of the coffee vessel relative to the water delivery head; and
the delivery of hot water.
